# EUROPEAN PATENT APPLICATION

(11) **EP 2 144 013 A1**
(43) Date of publication of application: **13.01.2010**
(21) Application number: 09007908.8
(22) Date of filing: 17.06.2009
(51) Int. Cl.: F24D 11/02

(54) **Thermohydraulic system and operating methods thereof**

(30) Priority: 20.06.2008 IT NO20080011; 29.07.2008 IT NO20080014; 29.07.2008 IT NO20080015
(71) Applicant: Rossi, Maria Rosa, 28060 Sozzago (NO) (IT)
(72) Inventor: Rossi, Maria Rosa, 28060 Sozzago (NO) (IT)
(74) Representative: Valentini, Giuliano

(57) **Abstract**

A system and a method are described for the conversion of sunlight luminous energy into heat. The system includes at least one first circuit (20) in which a first thermal exchange fluid is made to circulate, one or more solar panels (1) connected to the first circuit (20) and at least one pump (5) for the circulation of the first thermal exchange fluid that circulates in the first circuit (20) and, therefore, in the solar panels (1). The system includes at least one second circuit (30) in which at least one second thermal exchange fluid circulates and at least one heat pump (2) for thermally coupling the first circuit (20) and the second circuit (30).

## Description

The present invention relates to a system using thermo-hydraulic versatile solar panels, having low aesthetic impact and high efficiency, and the related operating methods.

The traditional conversion systems from sunlight energy into heat normally use panels composed of a conversion surface oriented to the sunlight. The conversion surface is usually made of high thermal conduction metal, properly coated by light absorbing material (black coating), where the light energy is absorbed and converted in heat. A circuit is thermally coupled to the conversion surface, where a heat exchange fluid flows.

A transparent pane (i.e. glass) is provided on the front part of the solar panel, oriented to the sun, in order to allow the lighting of the conversion surface, and avoiding at the same time the heat exchange with the surrounding environment, as well as for mechanical protection of said surface from atmospheric conditions, dust and foreign bodies. The traditional solar panel has also a back panel of thermo-insulating material, in order to reduce heat dispersion. A frame holds strictly the above said solar panel elements and includes the securing supports to earth, walls or roofs.

Internal possible high temperatures (up to 150°C and beyond) require particular design and realization care in order to avoid thermal loss and to keep high the conversion efficiency.

Moreover, the use of a glass strong enough for resisting to shocks and weather conditions leads to the realization of unsightly, heavy, expensive and difficult to install products.

Simpler panels are also available on the market, sometimes composed by simple black pipes, neoprene panels, or made of other suitable industrial materials, used for example for heating water of swimming pools.

The efficiency of these panels is good if the working temperature, that is the temperature of the circulating fluid, is not so far from air temperature, like in the above said example. When the temperature increases, as required by a sanitary or building heating system, the efficiency goes dramatically down because of the lack of a proper thermal insulation of the converters.

There are also photovoltaic panels where the produced heat is recovered, mainly for increasing the conversion efficiency of the cells, but they are very expensive because of the photovoltaic cells require a double electrical and hydraulic connection and they present anyway the drawbacks coming from a complex mechanical structure and a difficult installation, since their design target is not the optimized production of heat.

The object of the present invention is that of providing a system which allows the use of multi-functional solar panels, with very simple, strong, cheap and light structure, in order to integrate them easily in the building structural elements, such us external walls or roofs.

Another object of the present invention is that of providing a high conversion efficiency thermo-hydraulic system, where the thermal losses on the panels are reduced or even negative, i.e. with heat which is recovered from the environment.

A further object of the present invention is that of providing a thermo-hydraulic system and a related operating method where a partial lighting of the solar panels does not reduce significantly the efficiency because of the thermal gradient between the lighted area and the shaded area.

Still another objet of the present invention is that of providing a thermo-hydraulic system and a related operating method which allow an easy integration of the heat production coming from sunlight energy conversion with the recovery of heat from external air.

Still a further object of the present invention is that of providing a system and a method that allow the use of the wide conversion surface of said solar panels in order to waste the heat generated by the buildings cooling.

These objects are achieved by the present invention thanks to a conversion system from sunlight energy into thermal energy according to claim 1 and a related operating method according to claim 14. Further peculiar features of the present invention are listed in the relevant depending claims.

A conversion systems from sunlight energy into heat includes at least one first circuit, where a first heat exchange fluid is made to circulate, one or more solar panel connected to the first circuit and a fluid circulation pump for the first heat exchange fluid which circulates in the first circuit and therefore in the solar panels.

The system according to the present invention comprises advantageously at least one second circuit, where a second heat exchange fluid circulates, and at least one heat pump which thermally couples the first circuit to the second circuit.

This makes advantageously possible to control the working temperature of the solar panels in order to keep it normally equal to environment temperature, or less in the case when a higher energy production is needed, transferring the heat produced by the sun lighting in the same moment when it is formed.

In this way the thermal exchange with the environment is minimized, or even made negative by the possibility of heat absorption from the air, and the conversion efficiency of the sunlight radiation is kept high.

The presence of a heat pump allows to convert the heat obtained at controlled temperature to higher temperature heat for sanitary or building heating purpose.

The system may be advantageously equipped with a storage tank in order to use of the thermal energy in different times after the generation.

A control unit is advantageously provided to control the devices that compose the system, optimizing the heat production, adapting it to the needs and managing the limit situations and the alarms.

Features and advantages of the present invention will appear more clearly from the following description of an exemplificative and non-limiting embodiment, made with reference to the attached drawings, in which:
- Figure 1 shows a schematic view of the conversion system according to the present invention, up to the connection point with the sanitary or heating system;
- Figure 2 is a perspective view which shows a simplified example of solar panel used in a system according to the present invention;
- Figure 3 is a flow diagram illustrating a possible operating mode of a system according to the present invention;
- Figure 4 is a schematic view which shows a possible embodiment of a solar panel suitable for the use in the system according to the present invention; and
- Figure 5 is a schematic view which shows another possible embodiment of a solar panel suitable for the use in the system according to the present invention.

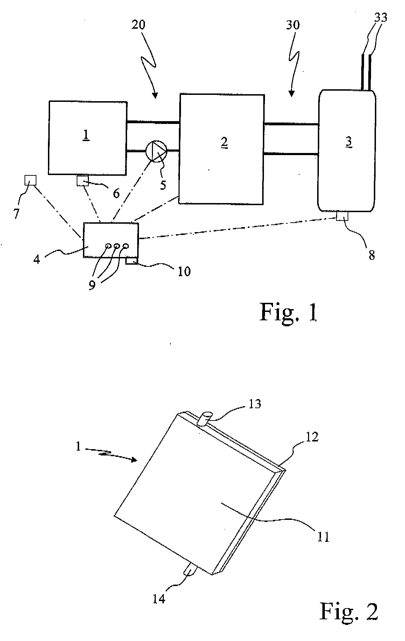

The reference numeral 1 in Figures 1 and 2 generically indicates a solar panel with load-bearing structure, i.e. without glass in the front part 11, having this way the conversion surface directly exposed to air.

In exemplificative and non-limiting way, the panel may be made of galvanized sheet-iron or aluminium. Extruded or moulded plastic materials to form channels for homogeneous flow of the fluid may be considered suitable for the use as well.

Into the panel 1, a heat exchange or transfer fluid flows, entered from the entry coupling 14 and collected from the output coupling 13. A possible insulation back-panel 12 may be required for limiting the heat exchanges with the building. Possible slots or other installation devices (not shown) may complete the panel.

The system schematically represented in Figure 1 includes in particular a first circuit 20 and a second circuit 30 thermally coupled by a heat pump 2.

A liquid is made to circulate in the first circuit 20, composed of water mixed with suitable antifreeze compounds, for example glycol or the like.

The fluid is circulated through a specific circulation pump 5, which regulates the flow rate, into the solar panel 1 or into the array composed by a plurality of connected panels 1 of this type, to a heat pump 2 which task is to increase the temperature up to the needed level.

The heat so produced can be transferred to the second circuit through a second thermal exchange or transfer fluid. The second circuit may include, for example, a storage tank 3 which allows to keep the hot water at the desired temperature for further utilization. Thermo-hydraulic links 33 are provided on the storage tank 3 for the connection to the sanitary or heating system.

In the embodiment herein represented, the second heat exchange fluid may consist of the same water sent to the sanitary or heating system. In this case, the storage tank 3 may be omitted.

Alternatively, the second thermal exchange fluid may be for example of the same kind of the fluid used in the first circuit, provided that a heat exchanger is included into the storage tank 3 for transferring heat between the second thermal exchange fluid and the water of the sanitary or heating system.

A control unit 4, in exemplificative and non-limiting way obtained by a market standard PLC controller or made by using the same control circuit of the heat pump 2, controls the system functionality.

On the basis of the external temperature, measured by a temperature sensor 7 placed in proximity of the solar panels, the control unit will activate the circulation pump 5 and the heat pump 2 in order to keep the panel temperature equal to, or less than, the environment temperature, thus reducing the thermal loss on the surface exposed to the sun and on the connecting pipes.

The temperature of the storage tank 3 is monitored in the same way, using the sensor 8. When the contained fluid reaches the upper working temperature, the control unit will stop the heat pump. According to the characteristics of the system, the circulation pump could continue to circulate the fluid or stop it.

In this case, or in the case of system off or fault, the temperature of the panels may rise in a safe way. In fact, having no thermal insulation over the exposed surface, they may exchange the heat in excess with the surrounding air, up to a thermal equilibrium point.

In the case of high thermal energy production demand, higher than the one supplied by the sun light, the control unit 4 may decide to lower more the solar panel temperature, down to the technical working limit, in order to obtain heat from the external air trough the wide exchanging surface.

The system can also works in the opposite way, taking heat from the storage tank 3 and dissipating it trough the surface of the panels 1, with more efficiency during the low or null sun lighting hours. In this way, through one investment and one installation only, it is possible to provide the winter heating of the building, and the summer cooling as well.

The control unit 4 may be advantageously equipped with a command and signal panel 9, and a data connector 10 for receiving data and programs and for sending information on status or alarms.

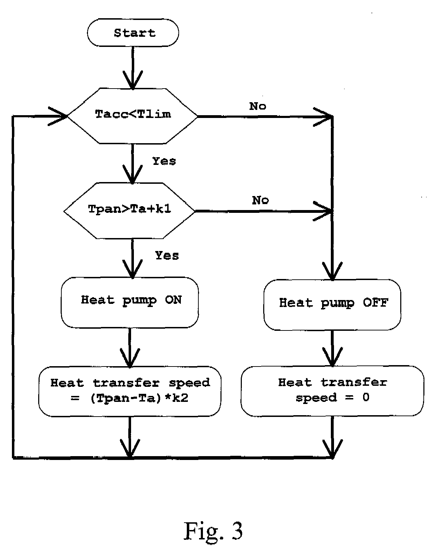

In exemplificative and non-limiting way, Figure 3 illustrates the logic of the control unit 4, in a version limited only to the hot water production.

In the diagram of Figure 3, Tpan is the temperature of the panel fluid measured by the sensor 6, Ta is the air temperature measured by the sensor 7, and Tacc is the temperature of the storage tank 3 measured by the sensor 8.

During the system working cycle, the temperature Tacc is compared with a predefined limit temperature Tlim. If the temperature Tacc of the storage tank 3 is greater than the temperature Tlim the cycle comes back to the starting condition, where the heat pump 2 and the circulation pump 5 are off. If the temperature Tacc il lower than the limit temperature Tlim, it goes to the next comparison.

The temperature Tpan of the solar panel 1 (or of the first thermal exchange fluid circulating in this panel) is then compared with the value given by the sum of the air temperature Ta with a predetermined constant k1. If the temperature Tpan is less than the sum of Ta and k1, the cycle goes back to the starting condition where the heat pump 2 and the circulation pump 5 are off. If the temperature Tpan is greater than the sum of Ta and k1, then the control logic switches on the heat pump 2 and the circulation pump 5.

So the heat transfer speed is controlled by the features of the heat pump 2, for example the scroll or inverter type, and by the speed of the circulation pump 5 according to the values coming from the relation indicated in Figure 3, where the difference between the panel temperature Tpan and the air temperature Ta is multiplied by a predetermined constant factor k2.

According to the present invention it is therefore possible to advantageously and simply integrate the solar panels in such structural elements of the building as, in exemplificative an non-limiting way, roof covers or shelters made of sheet metal, sheathing of external walls exposed to the sunlight, pedestrian transits or driveways, yard ground or any other surface exposed to the sunlight.

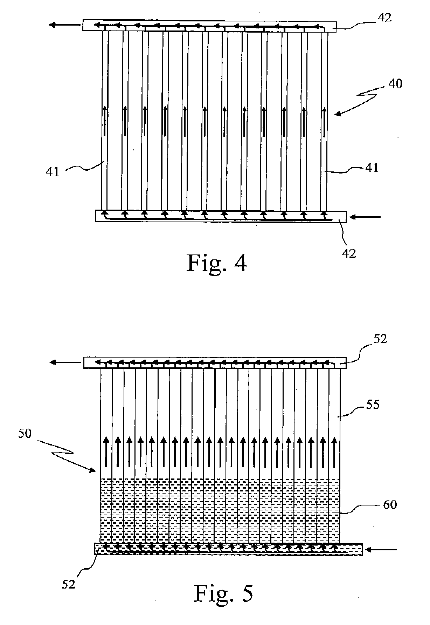

Among the possible embodiments of the solar panels usable according to the invention, Figure 4 shows a solar panel 40 in which the conversion element from sunlight energy into heat is made advantageously of various section pipes 41 and 42 suitably disposed in order to realize element of fences, banisters or railings, allowing the first thermal exchange fluid to flow into. Pipes 41 and 42 can be made for example of metallic materials, or anyway of any material having mechanical characteristics suitable to such use.

Another embodiment is shown in Figure 5, where the solar panel 50 consists of a sheet 55 having an alveolar structure properly connected to manifolds 52 for the delivery and the back-flow of the first thermal exchange fluid. The sheet 55 may be made of plastic, for example polycarbonate or the like.

A further advantage of this embodiment is given if the sheet 55 is formed by a transparent plastic alveolar material. It is so possible to make flowing a thermal exchange fluid 60 (only partially represented for clarity) having a suitable colour, for example a black fluid. With no circulation of fluid, the sunlight may pass through the sheet 55, while when the fluid is present and the light is converted into heat, the lighting of greenhouses, verandas and rooms is advantageously reduced.

## Claims

1. A system for the conversion of sunlight luminous energy into heat, including at least one first circuit in which a first thermal exchange fluid is made to circulate, one or more solar panels (1, 40, 50) connected to said first circuit and at least one circulation pump (5) of said first thermal exchange fluid circulating in said first circuit and said panels, **characterized by** including at least one second circuit, in which at least one second thermal exchange fluid circulates, and at least one heat pump (2) for thermal coupling of said first circuit to said second circuit.

2. The system according to claim 1, wherein said panels (1, 40, 50) have the conversion surface from sunlight to heat directly exposed to the air.

3. The system according to claim 1, wherein a control unit (4) is provided.

4. The system according to claim 3, wherein said control unit includes a command and signal panel (9).

5. The system according to claim 3, wherein said control unit (4) includes at least one digital communication connector (10).

6. The system according to claim 3, wherein said control unit is integrated in the control circuitry of said heat pump (2).

7. The system according to claim 1, wherein it is provided at least one temperature sensor (6) of said panels (1, 40, 50) and/or of said first heat exchange fluid circulating in the same.

8. The system according to claim 1, wherein it is provided at least one temperature sensor (7) of the external air.

9. The system according to claim 1, wherein said circulation pump (5) is integrated in said heat pump (2).

10. The system according to claim 1, wherein said second circuit includes at least one thermal storage and/or thermal exchange element (3).

11. The system according to claim 1, wherein said solar panels (1, 40) include pipes with a section suitable for the circulation of said first thermal exchange fluid and with mechanical features suitable for a contemporaneous utilization as fencing or protection elements.

12. The system according to claim 1, wherein said solar panels (1, 50) are implemented by an alveolar structure, and said first thermal exchange fluid flows into the conduits of said alveolar structure.

13. The system according to claim 1 or 12, wherein said solar panels (1, 50) are made of transparent alveolar plastic material, and wherein said thermal exchange fluid circulating in the conduits of said alveolar structure has a colour suitable for the conversion from sunlight energy to heat.

14. A method for operating a system for the conversion of sunlight luminous energy into heat, said system including at least one first circuit in which a first thermal exchange fluid is made to circulate, one or more solar panels (1, 40, 50) connected to said first circuit and at least one circulation pump (5) of said first thermal exchange fluid circulating in said first circuit and in said panels, **characterized by** controlling the temperature of said first thermal exchange fluid in order to adjust it to the temperature of the external air so as to minimize the thermal loss on said panels.

15. The method according to claim 14, **characterized by** controlling the temperature of said thermal exchange fluid circulating in said solar panels (1, 40, 50) to values lower than the temperature of the external air in order to recover the heat from the environment.

16. The method according to claim 14, **characterized by** using the conversion surface of said solar panels (1, 40, 50) as thermal exchanger from fluid to air for refrigeration, or anyway for heat disposal.
